# EUROPEAN PATENT SPECIFICATION

(11) **EP 4 622 805 B1**
(45) Date of publication and mention of the grant of the patent: **16.09.2026**
(21) Application number: 22844006.1
(22) Date of filing: 16.12.2022
(51) Int. Cl.: B60B 1/00, B60B 1/04, B60B 5/02, B60B 21/06

(54) **FIBER SPOKE SYSTEM, VEHICLE WHEEL, VEHICLE**
FASERSPEICHENSYSTEM, FAHRZEUGRAD, FAHRZEUG
SYSTÈME DE RAYONS EN FIBRE, ROUE DE VÉHICULE, VÉHICULE

(30) Priority: 21.11.2022 CN 202211453156
(43) Date of publication of application: 01.10.2025
(73) Proprietor: XIAMEN BAIYEXING OUTDOOR PRODUCTS CO., LTD., Xiamen, Fujian 361100 (CN)
(72) Inventor: YE, Jinji, Xiamen, Fujian 361100 (CN); YE, Ruijin, Xiamen, Fujian 361100 (CN); YANG, Pengfei, Xiamen, Fujian 361100 (CN); HUANG, Yibin, Xiamen, Fujian 361100 (CN)
(74) Representative: Hofmann, Andreas
(86) International application number: PCT/CN2022/139596
(87) International publication number: WO 2024/108701

(56) References cited:
- CN-A- 107 839 402
- CN-U- 214 606 894
- US-A1- 2013 320 749
- US-A1- 2018 022 147

## Description

### TECHNICAL FIELD

The present invention relates to a fiber spoke system for a bicycle.

### BACKGROUND

A spoke is a common vehicular accessory for connecting a rim and a hub, and is widely applied to small motor vehicles such as a bicycle and a motor cycle. The accessory spoke satisfies performance requirement of high tensile strength and good fatigue performance. A conventional steel wire spoke featuring large weight and relatively low tensile strength does not possess a competitive edge. Therefore, a fiber spoke with more excellent performance is invented.

A body of the fiber spoke is manufactured by bundling and modeling high-strength and high-modulus fibers. The structures of connecting pieces (an inner end portion and an enlarged head) at two ends for being connected to a rim and a hub are usually hardly manufactured by a fiber material directly due to relatively complicated structures. Therefore, most current fiber spokes are formed by connecting two end portions of the spoke main body made from the fiber material to corresponding connecting pieces made from other materials (for example, hard metals or ceramics) in a compounded manner.

There are primarily several technical solutions for this type of fiber spokes connected in a compound manner as follows:
I. The connecting piece for the inner end portion and the enlarged head is provided with a through hole, and two ends of the spoke main body are inserted into corresponding through holes of the connecting piece and are in glued connection through strong glue, for example, the way disclosed in US 4 729 605 A. Although the solution is simple in process, the spoke main body and the connecting piece are bonded through glue, so that the fatigue strength of the spoke is low, and the connecting piece is extremely easy to fall off as a result of fatigue rupture of glue in a long-term using process,
II. The connecting for the inner end portion and the enlarged head is provided with a cone-shaped through hole. Two ends of the spoke main body are introduced into the cone-shaped through holes of the connecting pieces at two ends, then the spoke main body is expanded by fibers, cone-shaped heads are cured with epoxy resin or the cone-shaped heads are formed by wrapping yarns for thickening, and then the connecting pieces tensioned towards two ends or pulled out for interference fitting, for example, the way disclosed in US 2013/0320749 A1, WO 03/020535 A2, CN 207028695 U and the like.
   CN 214606894 U discloses an opening prefabricated type carbon fiber spoke which comprises a spoke body made of carbon fibers, a tooth cap capable of being connected with a rim in a matched mode and a cap head capable of being connected with a hub in a matched mode, a first fixing connector and a second fixing connector are arranged at the two ends of the spoke body, the first fixing connector is provided with a diameter expanding part, and the second fixing connector is provided with a forking part. Through installation holes are formed in the tooth caps and the cap heads, the cap heads are connected to the first fixed connectors of the spoke bodies in a sleeved mode, the tooth caps are connected to the second fixed connectors of the spoke bodies in a sleeved mode, and wedge-shaped pins are arranged on the forked portions of the second fixed connectors in a matched mode. The two ends of the spoke body form slopes, the spoke body is tighter and tighter under the action of pulling force, the tensile strength is greatly improved, and the spoke has the advantages of being easy and convenient to produce and operate, high in efficiency, low in cost and the like.
   Alternatively, further, conical or fusiform supporting members are put into two ends of the spoke main body to form the cone-shaped heads, for example, the way disclosed in CN 107839402 A or in US 2018/0022147 A1. Although the spokes manufactured in these solutions are relatively high in strength, the production process is complicated, the requirement on the dimensional accuracy of a die is high, the production period is long and the efficiency is relatively low.
III. Furthermore, someone has proposed a solution that yarns are wrapped at two ends of the spoke main body to form a convex snap ring for clamping limitation with stepped inner holes of the inner end portion and the enlarged head or a solution that the inner end portion and the enlarged head are fixed by clamping and gluing the end portions of the spoke main body and the like. However, these solutions have further meanings in the level of creativity and concept, and are adverse to actual production and manufacturing applications in the industry as a result of complicated process.

### SUMMARY

Therefore, aiming at the above problems, the present invention provides a fiber spoke system with an optimized structure, and a vehicle wheel and a vehicle applying the improved fiber spoke system.

The present invention is realized by adopting the following technical solution:

A fiber spoke system provided by the present invention-includes a fiber spoke system with the features of claim 1.

In an embodiment, the hole is a through hole extending and penetrating along the central axis direction of the main body, the insert is an independent part, and the insert is wedged into the notch from an outward end of the through hole after the spoke main body is sleeved in the through hole.

In an embodiment, the hole is a blind hole extending from one end to the other end in the central axis direction of the main body and stretching into the main body, the insert is erectly and fixedly connected to a bottom wall of the blind hole, and the insert is wedged into the notch in the blind hole after the tail end of the spoke main body is inserted into the blind hole.

In an embodiment, two ends of the main body are defined as a first end and a second end about the axis extension direction of the main body of the connecting piece, and the hole is divided into two sections in the axis direction, namely, a first section closer to the first end and a second section closer to the second end, wherein a hole inwall of the first section and a hole inwall of the second section are in smooth cohesion transition.

In an embodiment, two ends of the main body are defined as the first end and the second end about the axis extension direction of the main body of the connecting piece, and the hole is divided into two sections in the axis direction, namely, a first section closer to the first end and a second section closer to the second end, wherein a step structure is formed on a hole wall of a joint of the first section and the second section.

In an embodiment, the step structure is further provided with a chamfer angle.

In an embodiment, the first end of the connecting piece is provided with a protrusion with a larger outer diameter, so that the connecting piece serves as an enlarged head.

In an embodiment, the first end of the connecting piece is provided with an external thread, so that the connecting piece serves as an inner end portion.

In an embodiment, the hole inwall of the first section of the hole is in a shape of a cylindrical hole or a truncated cone shaped hole with slight taper or a substantially elliptically cylindrical hole or a substantially elliptically conical hole with slight taper.

In an embodiment, the hole inwall of the second section of the hole is in a shape of a cylindrical hole.

In an embodiment, a ratio of the length of the first section to that of the second section is 2:1.

In an embodiment, the insert is a "-" -shaped insert, and the notch is a "-" -shaped notch.

In an embodiment, a contour of the "-" -shaped insert in a front view is rectangular, with the length thereof corresponding to the depth of the notch and the width thereof corresponding to a diameter of an outer end surface of the spoke main body, and a contour of the "-" -shaped insert in a side view is substantially "-" -shaped, but the end facing the wedging direction is of an increasingly thinned cutting edge structure.

According to the invention, the insert is a "+" -shaped insert, and the notch is a "+" -shaped notch.

According to the invention, the "+" -shaped insert is formed by perpendicularly crossing two "-" -shaped inserts, with the length thereof corresponding to the depth of the notch and the transverse width and the longitudinal width of the two crossed sheet bodies thereof corresponding to the outer diameter of the corresponding intersecting axis of the outer end surface of the spoke main body, respectively, and the end of the "+" -shaped insert facing the wedging direction is of an increasingly thinned cutting edge structure.

In an embodiment, the length of the insert and the depth of the notch are not smaller than the length of the first section.

In an embodiment, the length of the insert and the depth of the notch are greater than the length of the first section.

In an embodiment, the insert is made from a material with a yield strength.

In an embodiment, the insert is made from a material with a relatively low yield strength, an elasticity limit of the material being smaller than 10 kgf/mm².

In an embodiment, the insert is made from a metal element aluminum, a tin alloy, a metal element tin, a lead alloy or a metal element lead.

In an embodiment, the spoke main body is a long rod formed by curing a plurality of bundled fibers made from a high-strength and high-modulus material.

In an embodiment, the cross-section of the hole inwall of the hole is elliptical or quasi-elliptical, the insert is the "-" -shaped insert, and the notch is the "-" -shaped notch.

In an embodiment, the cross-section of the hole inwall of the hole is round, the insert is the "+" -shaped insert, and the notch is the "+" -shaped notch.

In an embodiment, the cross-section of the hole inwall of the hole is round, the insert is the "-" -shaped insert, and the notch is the "-" -shaped notch.

In an embodiment, the "-" -shaped insert is made from a material with the relatively low yield strength, the elasticity limit of the material being smaller than 10 kgf/mm².

Based on the above, the present invention further provides a vehicle wheel, including the fiber spoke and further including a rim and a hub connected by the spoke fiber.

In an embodiment, the vehicle wheel is a bicycle wheel.

Based on the above, the present invention further provides a vehicle, including the vehicle wheel and further including a frame for installing the vehicle wheel.

In an embodiment, the vehicle is a bicycle.

A method for manufacturing a fiber spoke system includes the following steps (, said manufacturing method not being part of the present invention):
S101: providing a long rod-shaped spoke;
S102: providing a first connecting piece and a second connecting piece, wherein the first connecting piece and the second connecting piece each comprises a hollow columnar main body and a through hole passing through the main body in a central axis;
S103: forming notches in two ends of the spoke;
S104: sleeving the first connecting piece and the second connecting piece at two ends of the spoke, respectively;
S105: providing two inserts, and wedging the two inserts into the notches in two ends of the spoke, respectively; and
S106: applying a tensile force towards the outside to each of the first connecting piece and the second connecting piece to force the two inserts to wedge the spoke tightly.

Further, the present invention further provides another method for manufacturing a fiber spoke, including the following steps:
S201: providing a long rod-shaped spoke;
S202: providing a first connecting piece and a second connecting piece, wherein the first connecting piece and the second connecting piece each comprises a hollow columnar main body, a blind hole facing the other end from one end in a central axis and stretching into the main body, and an insert fixedly connected to an inner bottom wall of the blind hole;
S203: forming notches in two ends of the spoke; and
S204: inserting the two ends of the spoke into the blind holes of the first connecting piece and the second connecting piece, respectively, so as to correspondingly wedge the notches in two ends of the spoke into the inserts of the first connecting piece and the second connecting piece, respectively.

The technical solution provided by the present invention has the following beneficial effects: the fiber spoke not cured by glue or a resin is relatively simple to produce and assemble and easy to implement, and features a long service life due to high connecting strength.

### BRIEF DESCRIPTION OF DRAWINGS

FIG. 1 is a schematic diagram of a vehicle wheel embodiment of the present invention.
FIG. 2 is a section view in A-A of FIG. 1 (in order to express detailed features more clearly, a section line is not drawn).
FIG. 3 is a section view of a first connecting piece in a first embodiment of a fiber spoke of the present invention in a central axis.
FIG. 4 is a section view of a first connecting piece in the first embodiment of the fiber spoke of the present invention in B-B of FIG. 3.
FIG. 5 is a section view of a second connecting piece in the first embodiment of the fiber spoke of the present invention in the central axis.
FIG. 6 is a schematic diagram of a spoke main body in the first embodiment of the fiber spoke of the present invention.
FIG. 7 is a schematic diagram of the spoke main body in the first embodiment of the fiber spoke of the present invention provided with a notch.
FIG. 8 is a partial enlarged drawing of FIG. 7.
FIG. 9 is a section view in C-C of FIG. 8.
FIG. 10 is a schematic diagram of a "-"-shaped insert of the fiber spoke of the present invention.
FIG. 11a is a first schematic diagram of the first embodiment of the fiber spoke of the present invention during assembly.
FIG. 11b is a second schematic diagram of the first embodiment of the fiber spoke of the present invention during assembly.
FIG. 11c is a third schematic diagram of the first embodiment of the fiber spoke of the present invention during assembly.
FIG. 12 is a schematic diagram of a fiber spoke fixed by glue in the prior art.
FIG. 13 is a schematic diagram of the fiber spoke in the prior art adopting a cone-shaped head anti-falling fixing structure by wrapping yarns.
FIG. 14 is a schematic diagram of the fiber spoke of the present invention wedged tightly by using the insert.
FIG. 15 is a section view of the first connecting piece in a second embodiment of the fiber spoke of the present invention in the central axis.
FIG. 16 is a section view of the first connecting piece in the second embodiment of the fiber spoke of the present invention in D-D of FIG. 15.
FIG. 17 is a section view of a second connecting piece in the second embodiment of the fiber spoke of the present invention perpendicular to the central axis.
FIG. 18 is a section view of the first connecting piece in a third embodiment of the fiber spoke of the present invention in the central axis.
FIG. 19 is a section view of the second connecting piece in the third embodiment of the fiber spoke of the present invention in the central axis.
FIG. 20 is a schematic diagram of a "+"-shaped notch in an end surface of the spoke main body in a fourth embodiment of the fiber spoke of the present invention.
FIG. 21 is a schematic diagram of a "+"-shaped insert in the fourth embodiment of the fiber spoke of the present invention.
FIG. 22 is a schematic diagram of a test example I of the fiber spoke of the present invention.
FIG. 23 is a schematic diagram of a test example II of the fiber spoke of the present invention.
FIG. 24 is a comparison diagram of test results of structural performance of the test example I and the test example II of the fiber spoke of the present invention.
FIG. 25 is a comparison diagram of test results of structural performance of the test example III and the test example IV of the fiber spoke of the present invention.
FIG. 26 is a schematic diagram of a test example V of the fiber spoke of the present invention.
FIG. 27 is a schematic diagram of a test example VI of the fiber spoke of the present invention.
FIG. 28 is a schematic diagram of a test example VII of the fiber spoke of the present invention.
FIG. 29 is a comparison diagram of test results of structural performance of the test example V, the test example VI and the test example VII of the fiber spoke of the present invention.
FIG. 30 is a comparison diagram of test results of structural performance of the test example V, the test example VII and the test example VIII of the fiber spoke of the present invention.
FIG. 31 is a section view of a first connecting piece in one embodiment of another embodiment group of a fiber spoke of the present invention in a central axis.
FIG. 32 is a section view of the first connecting piece in one embodiment of another embodiment group of a fiber spoke of the present invention in B-B of FIG. 31.
FIG. 33 is a section view of the first connecting piece in another embodiment of another embodiment group of the fiber spoke of the present invention in B-B of FIG. 31.
FIG. 34 is a section view of the first connecting piece in yet another embodiment of another embodiment group of the fiber spoke of the present invention in B-B of FIG. 31.
FIG. 35 is a section view of a second connecting piece in one embodiment of another embodiment group of the fiber spoke of the present invention in a central axis.
FIG. 36a is a first schematic diagram of one embodiment of another embodiment group of a fiber spoke of the present invention during assembly.
FIG. 36b is a second schematic diagram of one embodiment of another embodiment group of the fiber spoke of the present invention during assembly.
FIG. 36c is a third schematic diagram of one embodiment of another embodiment group of the fiber spoke of the present invention during assembly.
FIG. 36d is a fourth schematic diagram of one embodiment of another embodiment group of the fiber spoke of the present invention during assembly.
FIG. 37 is a flowchart of a method for manufacturing a fiber spoke of the present invention.
FIG. 38 is a flowchart of another method for manufacturing a fiber spoke of the present invention.

### DESCRIPTION OF EMBODIMENTS

To further describe the embodiments, the present invention is provided with drawings. These drawings are a part of contents disclosed by the present invention, are mainly used for describing the embodiments and can be matched with related description of the description to explain the operation principles of the embodiments. Referring to these contents, those of ordinary skill shall understand other possible embodiments and advantages of the present invention. Components in the drawings are not drawn in proportion, and similar component symbols are usually used for representing similar components.

The present invention will be further described in combination with the drawings and the specific embodiments.

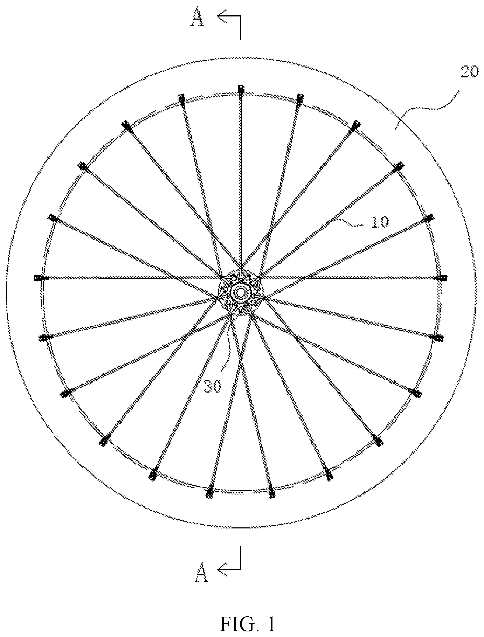

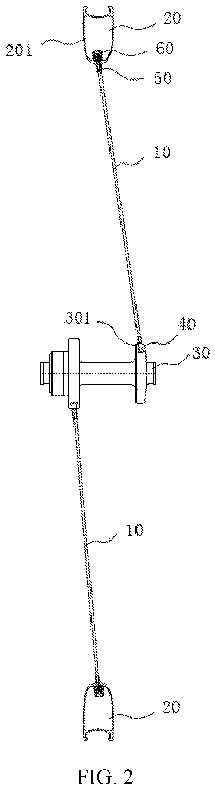

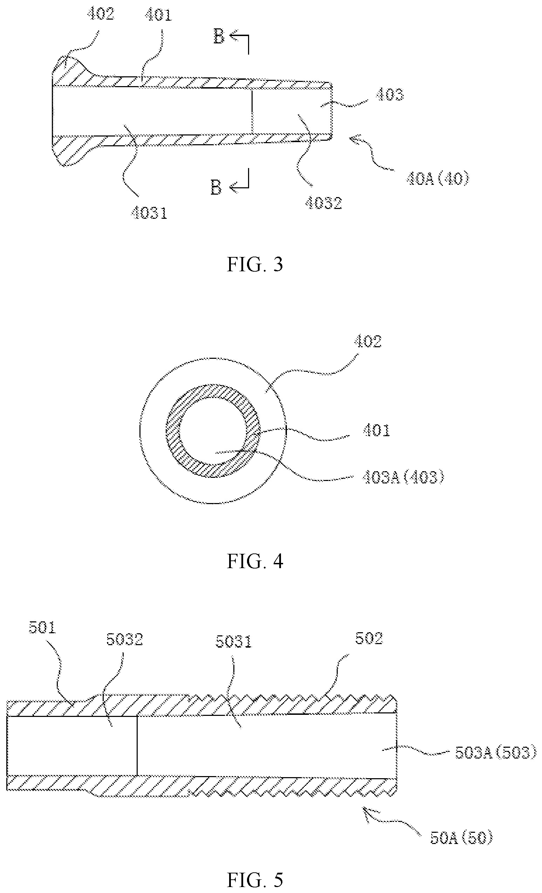

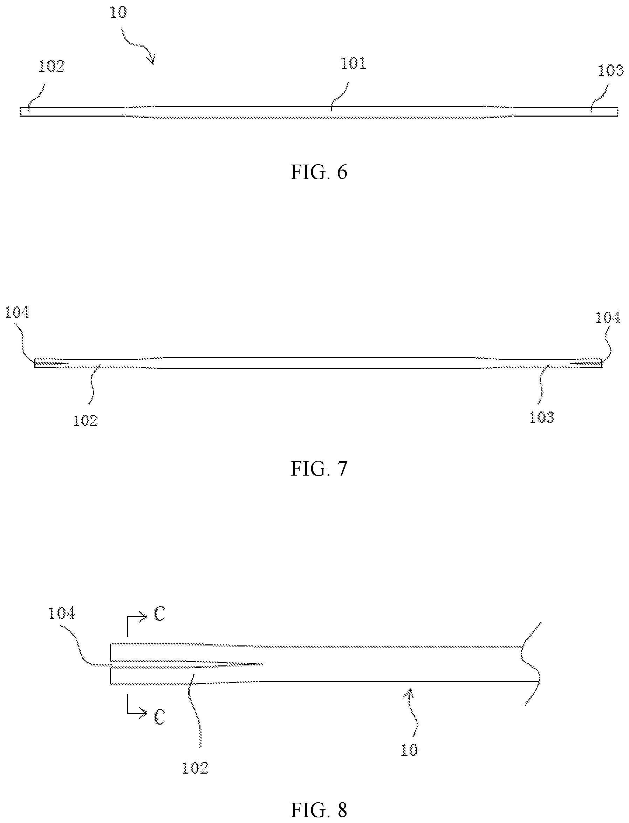

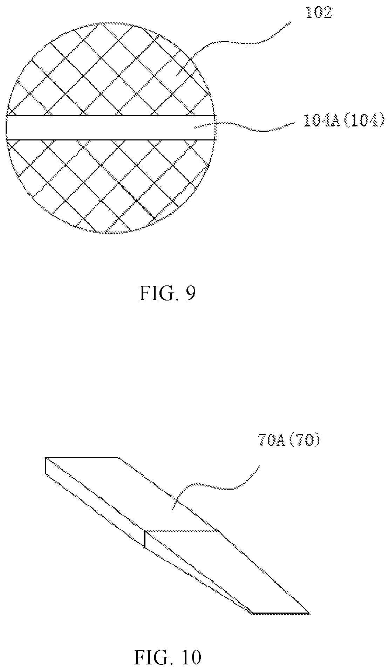

Referring to FIG. 1-10 and FIG. 11a-11c, the first embodiment of the present invention provides a fiber spoke 10. The fiber spoke 10 includes a long rod-shaped spoke main body 101 and a first connecting piece 40 and a second connecting piece 50 fixedly connected to two ends 102 and 103 of the spoke main body 101.The spoke main body 101 is formed by curing a plurality of bundled fibers made from a high-strength and high-modulus material by a strong resin. The first connecting piece 40 and the second connecting piece 50 are manufactured from a hard metal, a ceramic or a hard engineering resin and the like. The first connecting piece 40 and the second connecting piece 50 have different structures of different abutted abutting objects. In the embodiment, the connecting piece 40 is an enlarged head, and the connecting piece 50 is an inner end portion, which are connected to a hub 30 and a rim 20, respectively. As shown in FIG. 1 and FIG. 2, the connecting piece 40 of the enlarged head of the first end 102 of each of the plurality of fiber spokes 10 can be clamped and hung into an assembly groove 301 of the hub 30, and the connecting piece 50 of the inner end portion of the second end 103 can be fixed in an inner groove 201 of the rim 20 through a spoke nipple 60, thereby forming an integral vehicle wheel.

It is to be noted that the embodiment is described by taking a spoke main body 3 made from a carbon fiber material as an example. Those skilled in the art can expect a feasible solution of adopting a high-strength and high-modulus fiber spoke main body made from other materials. The high-strength and high-modulus fiber refers to a high performance fiber material defined under a well-known standard in the industry. Specifically, the high-strength and high-modulus fiber refers to a synthetic fiber or a natural fiber with the strength greater than 10 CN/dkex and the modulus greater than 200 CN/dkex.

The first connecting piece 40 in the embodiment serves as the enlarged head connected to the hub 30. The specific structure of the first connecting piece includes a cylindrical main body 401, a protrusion 402 formed at one end of the main body 401 with a larger outer diameter and a through hole 403 passing through the main body 401 in the central axis. The through hole 403 can be substantially divided into two sections: a first section 4031 closer to the protrusion 402 and a second section 4032 farther away from the protrusion 402, respectively. In the embodiment, the inner wall of the through hole of the second section 4032 is in a shape of a cylindrical hole, and the inner wall of the through hole of the first section 4031 is in a shape of a cylindrical hole or a truncated cone shaped hole with slight taper (1-5°).The inner wall of the through hole of the first section 4031 and the inner wall of the through hole of the second section 4032 are in smooth cohesion transition. The first connecting piece 40 in the first embodiment is a first connecting piece 40A of a first configuration, and the through hole 403 is a through hole 403A of a first configuration. In other embodiments, according to requirements in application, an outer contour of the main body 401 can further be quadrangular, for location fit with a twist-preventing hanging groove of the hub.

The second connecting piece 50 in the embodiment serves as the inner end portion abutted with the spoke nipple 60. The specific structure of the second connecting piece includes a cylindrical main body 501, an external thread 502 formed at one end of the main body 501 for threaded connection and assembly with an internal thread of the spoke nipple 60 and a through hole 503 passing through the main body 501 in the central axis. The through hole 503 can be substantially divided into two sections in the axis direction: a first section 5031 closer to the external thread 502 and a second section 5032 farther away from the external thread 502, respectively. In the embodiment, the inner wall of the through hole of the second section 5032 is in a shape of a cylindrical hole, and the inner wall of the through hole of the first section 5031 is in a shape of a cylindrical hole or a truncated cone shaped hole with slight taper (the included angle of taper is 1-5°).The inner wall of the through hole of the first section 5031 and the inner wall of the through hole of the second section 5032 are in smooth cohesion transition. The second connecting piece 50 in the first embodiment is a second connecting piece 50A of a first configuration, and the through hole 503 is a through hole 503A of a second configuration.

A middle section of the spoke main body 101 of the fiber spoke 10 in the embodiment is processed into a flat shaft shape in the forming and curing process, and the two ends 102 and 103 connected therewith are still cylinder axis-shaped, so that the flat shaft shape design of the middle section of the spoke main body 101 can be used for reducing wind resistance of the vehicle.

In addition, the first end 102 and the second end 103 of the fiber spoke 10 each is provided with a section of notch 104 from the tail end to the middle in the axis direction. The notch 104 in the embodiment is a "-"-shaped notch 104A passing through the center of circle of a round end surface of the cylindrical shaft of the first end 102 or the second end 103 of the fiber spoke 10. The "-"-shaped notch 104A divides the tail end of the first end 102 or the second end 103 of the fiber spoke 10 into two forking semi-cylinders. The present invention further provides an independent part-insert 70. The insert 70 is made from a material with a yield strength (for example, a single metal, a metal alloy, a ceramic, a plastic, a hard natural product and the like), so that the insert is wedged into the notch 104 without great deformation. Specifically, the embodiment further provides a "-"-shaped insert 70A corresponding to the "-"-shaped notch 104A. A contour of the "-"-shaped insert 70A in a front view is rectangular, with the length thereof corresponding to the depth of the notch 104 and the width thereof corresponding to a diameter of the round end surface of the first end 102 or the second end 103 of the spoke main body 101, and a contour of the "-"-shaped insert 70A in a side view is substantially "-"-shaped, but the end facing the wedging direction is increasingly thinned to form a sharp cutting edge structure, so that the insert is wedged into the notch 104.

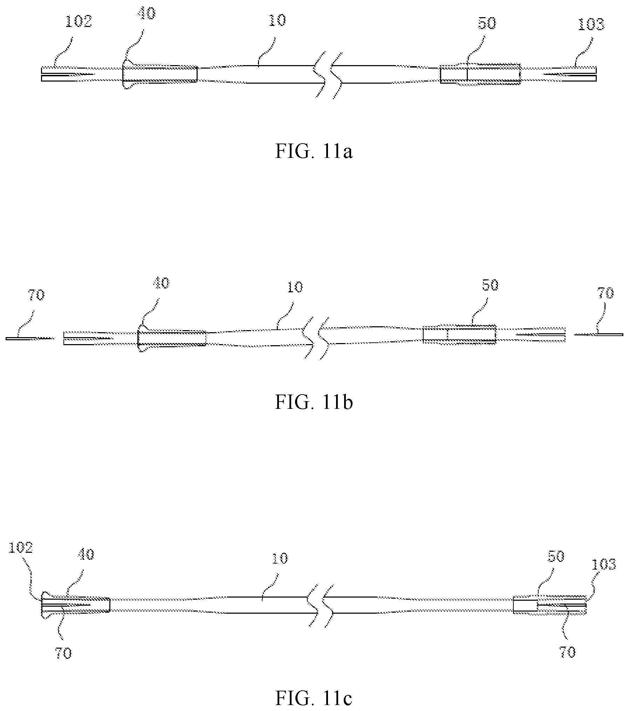

Referring to FIG. 11a-11c, during assembly, after the first end 102 and the second end 103 of the fiber spoke 10 are sleeved into the first connecting piece 40 and the second connecting piece 50 respectively, the notch 104 is cut, or the first end 102 and the second end 103 of the fiber spoke 10 with the notch 104 cut in advance are sleeved into the first connecting piece 40 and the second connecting piece 50 respectively, wherein the first connecting piece 40 is sleeved from the end of the through hole 403 facing the second section 4032, and the second connecting piece 50 is sleeved from the end of the through hole 503 facing the second section 5032, so that the protrusion 402 of the first connecting piece 40 and the external thread 502 of the second connecting piece 50 face the outer end. Then, the two inserts 70 are wedged into the notches 104 of the first end 102 and the second end 103 of the fiber spoke 10, respectively. Finally, a tensile force is applied to each of the first connecting piece 40 and the second connecting piece 50. The first connecting piece 40 and the second connecting piece 50 will force the two inserts 70 to tightly wedge the fiber spoke 10 and the first connecting piece 40 and the second connecting piece 50 fully in the process that the first connecting piece and the second connecting piece shift towards the outside of the spoke main body 101.

By considering the rationality of the structural performance, in the embodiment, the diameters of the cylinders of the first end 102 and the second end 103 of the fiber spoke 10 are about 2 mm. The ratio of the length of the first section 4031 of the through hole 403 of the first connecting piece 40 to the length of the second section 4032 of the through hole of the first connecting piece is about 2: 1. For example, the length of the first section 4031 is 10 mm and the length of the second section 4032 is 5 mm. Similarly, the ratio of the length of the first section 5031 of the through hole 503 of the second connecting piece 50 to the length of the second section 5032 of the through hole of the second connecting piece is also about 2: 1. For example, the length of the first section 5031 is 10 mm and the length of the second section 5032 is 5 mm. The depth of the notch 104 and the preferred length of the insert 70 are not smaller than the length of the first sections 4031 and 5031, so that a better wedging force can be obtained, which will be specifically described below in combination with test data. Detail description is not conducted herein.

In addition, it is to be noted that the notch 104 in the embodiment shall be an opened sectioned notch passing through the periphery from the interiors of the first end 102 and the second end 103 of the fiber spoke 10, so that the tail end of the first end 102 or the second end 103 of the fiber spoke 10 can be thoroughly divided into two or more forking portions. Therefore, in the process that the first connecting piece and the second connecting piece shift towards the outside relative to the spoke main body 101 by applying the tensile force towards the outside to each of the first connecting piece 40 and the second connecting piece 50, the forces are applied to at least two forking portions at two ends of the fiber spoke 10 by virtue of the inserts 70, a part of fibers in the periphery of the forking portions deviate and the other part fills the through hole 403 of the first connecting piece 40 and the through hole 503 of the second connecting piece 50, so that the fiber spoke 10 and the first connecting piece 40 and the second connecting piece 50 can be tightly wedged fully, and therefore, the connection is extremely firm.

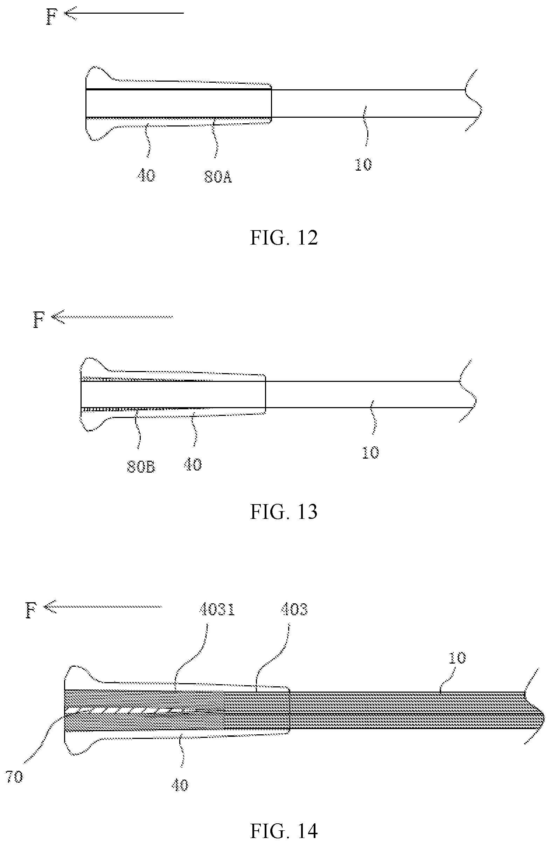

It can be seen from the above description that the process for producing and manufacturing the fiber spoke in the embodiment is relatively simple and easy to implement. In addition, the fiber spoke in the embodiment needs neither gluing nor secondary yarn wrapping, but the structural strength of the fiber spoke is higher. Compared with a solution by fixation by gluing in the prior art, as shown in FIG. 12, the binding force of the glue in the solution by fixation by gluing in the prior art is further inferior to a compressing expansion force of a mortise and tenon joint structure. When the spoke 10 is subjected to long-term fatigue impact, irreversible structural damage will be caused once a fine crack occurs in glue 80A in a gluing position. Furthermore, compared with the anti-falling fixing structure of the cone-shaped head by wrapping yarns in the prior art, as shown in FIG. 13, although the anti-falling fixing structure of the cone-shaped head in the prior art utilizes the compressing expansion performance to a certain extent, because a small section short yarn 80B in a yarn wrapping position wraps the spoke 10 to cure and form, when the spoke 10 is subjected to the tensile force, the short yarn 80B will suffer from a strong frictional thrust from the connecting piece as the outer surface of the short yarn directly contacts the inner surface of the through hole of the connecting piece. As the wrapped short yarn formed secondarily is not connected to the spoke main body well, they are connected merely dependent on the binding force after the resin is cured. The principle is similar to that of the glue. When the binding force is damaged, an irreversible consequence will be generated.

As the principle of the mortise and tenon joint structure is used in the present invention, when the fiber spoke 10 is tightly wedged by the insert 70, a compressing force with extremely strength can be generated with the first connecting piece 40 and the second connecting piece 50.As shown in FIG. 14, when the first connecting piece 40 and the second connecting piece 50 suffer from the tensile forces, continuous fibers of the spoke main body 101 and the plugging insert 70 can prevent the first connecting piece 40 and the second connecting piece 50 from sliding outwards as long as the size of the insert 70 meets a predetermined requirement. As the spoke main body 101 is formed by curing a plurality of bundled fibers made from a high-strength and high-modulus material by a strong resin, continuous fibers in the fiber bundle have super resistance to tension. Therefore, the first connecting piece 40 and the second connecting piece 50 cannot structurally damage the insert 70. Furthermore, as the insert 70 is subjected to an extrusion force from the spoke of the forking portions on two sides when the spoke main body 101 is tensioned, and a part of fibers in the peripheries of the forking portions will deviate due to the extrusion force and the other part fills the gaps, there is no problem that the insert 70 slides out.

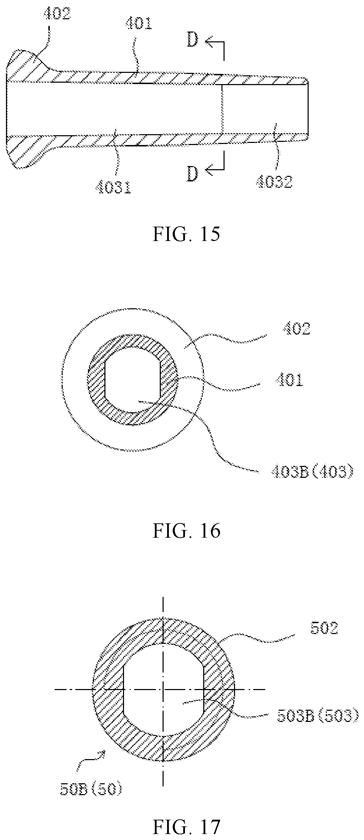

The second embodiment of the present invention provides a fiber spoke, which similarly includes a long rod-shaped spoke main body and a first connecting piece and a second connecting piece fixedly connected to two ends and of the spoke main body. The second embodiment is substantially the same as the first embodiment, and the difference lies in that configurations of the first connecting piece and the second connecting piece are different from those in the first embodiment. Referring to FIG. 15 and FIG. 16, the difference between the first connecting piece 40 and the first connecting piece 40A of the first configuration is described by taking the second connecting piece 40B of the second configuration in the second embodiment as an example. An improved feature of the first connecting piece 40B of the second configuration lies in that the through hole 403 of the first connecting piece 40 is the through hole 403B of the second configuration, and the cylindrical hole or the truncated cone shaped hole with slight taper of the inner wall of the through hole of the through hole 403B of the second configuration in the first section 4031 closer to the protrusion 402 is modified and replaced by a substantially elliptically cylindrical hole (standard elliptical or quasi-elliptical shape formed by cutting two sides of a circle flat) or a substantially elliptical cone-shaped hole with slight taper.

Referring to FIG. 17, the structure of the second connecting piece 50 in the second embodiment is the second connecting piece 50B of the second configuration. The second connecting piece 50B of the second configuration is formed by adopting t he improved feature as same as the first connecting piece 40B of the second configuration based on the structure of the second connecting piece 50 in the first embodiment, i.e., the through hole 503 of the second connecting piece 50 is the through hole 503B of the second configuration, the cylindrical hole or the truncated cone shaped hole with slight taper of the inner wall of the through hole in the first section 5031 closer to the external thread 502 is modified and replaced by a substantially elliptically cylindrical hole (standard elliptical or quasi-elliptical shape formed by cutting two sides of a circle flat) or a substantially elliptical cone-shaped hole with slight taper. Other parts are consistent with the structure of the second connecting piece 50 in the second embodiment, which is not described in detail herein.

Compared with the first embodiment, the fiber spoke provided in the second embodiment has advantages and disadvantages in manufacturing cost, structural performance and production operability by adopting the first connecting piece 40B and the second connecting piece 50B of different configurations of the through holes, which will be comparatively described below and will not be described herein.

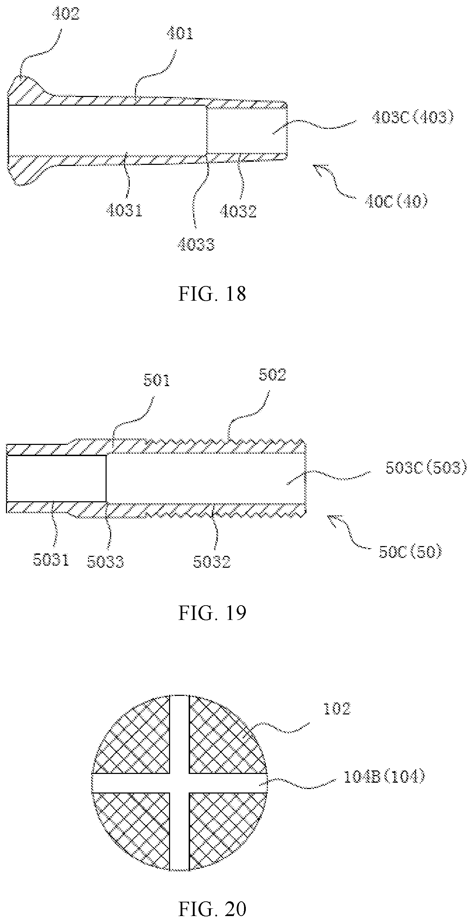

The third embodiment of the present invention provides a fiber spoke, which similarly includes a long rod-shaped spoke main body and a first connecting piece and a second connecting piece fixedly connected to two ends and of the spoke main body. The third embodiment is substantially the same as the first embodiment, and the difference lies in that configurations of the first connecting piece and the second connecting piece are different from those in the first and second embodiments. Referring to FIG. 18, the first connecting piece 40 in the third embodiment is the first connecting piece 40C of the third configuration, and its improved feature lies in that the through hole 403 of the first connecting piece 40 is the through hole 403C of the third configuration. The through hole 403C of the third configuration can be similarly divided into two sections: the first section 4031 closer to the protrusion 402 and the second section 4032 farther away from the protrusion 402, respectively, wherein the inner wall of the through hole of the second section 4032 is a cylindrical hole with a relatively small diameter, and the inner wall of the through hole of the first section 4031 is a cylindrical hole or a substantially elliptically cylindrical hole with a relatively large diameter, so that a step structure 4033 is formed on the inner hole wall of the joint of the first section 4031 and the second section 4032. Some features can be optimized through the step structure, which will be specifically described below in combination with test data and will not be described in detail herein. In addition, in order to further improve the performance, the abrupt step will generate relatively large local stress to the spoke main body. Therefore, the step structure 4033 can be provided with a chamfer angle such as an arc-shaped chamfer angle or a bevel chamfer angle for performance improvement.

Referring to FIG. 19, the through hole 503 of the second connecting piece 50 is the through hole 503C of the third configuration. The through hole 503C of the third configuration can be similarly divided into two sections: the first section 5031 closer to the protrusion 502 and the second section 5032 farther away from the protrusion 502, respectively, wherein the inner wall of the through hole of the second section 5032 is a cylindrical hole with a relatively small diameter, and the inner wall of the through hole of the first section 5031 is a cylindrical hole or a substantially elliptically cylindrical hole with a relatively large diameter, so that a step structure 5033 is formed on the inner hole wall of the joint of the first section 5031 and the second section 5032. Some features can be optimized through the stepped structure, which will be specifically described below in combination with test data and will not be described in detail herein. In addition, in order to further improve the performance, the abrupt step will generate relatively large local stress to the spoke main body. Therefore, the step structure 5033 can be provided with a chamfer angle such as an arc-shaped chamfer angle or a bevel chamfer angle for performance improvement.

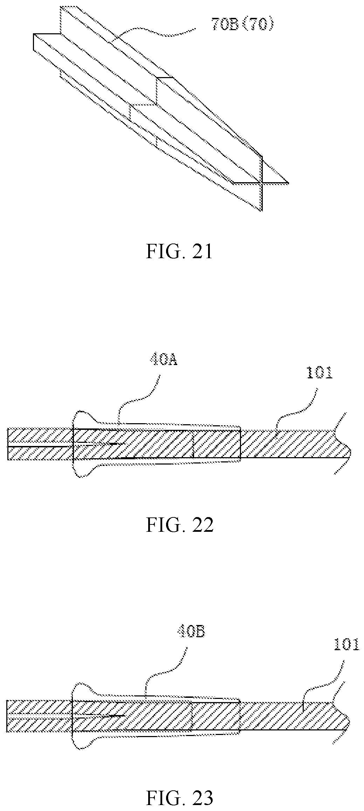

The fourth embodiment of the present invention provides a fiber spoke, which similarly includes a long rod-shaped spoke main body and a first connecting piece and a second connecting piece fixedly connected to two ends and of the spoke main body. The first connecting piece and the second connecting piece in the third embodiment can be the connecting pieces 40A and 50A of the first configuration in the first embodiment or the connecting pieces 40B and 50B of the second configuration in the second embodiment or the connecting pieces 40C and 50C of the third configuration in the third embodiment. However, the insert in the fourth embodiment is the insert of different configuration, and the notch 104 adapted to the insert is in a corresponding different shape. The rest part of the embodiment is similar to the above embodiments, which is not repeatedly described herein. Specifically referring to FIG. 20 and FIG. 21, the inserts 70 of different configurations in the embodiment are "+"-shaped inserts 70B. The "+"-shaped insert 70B is formed by perpendicularly crossing two "-"-shaped inserts 70A, with the length thereof also corresponding to the depth of the notch 104 and the transverse width and the longitudinal width of the two crossed sheet bodies thereof also corresponding to the outer diameter of the corresponding intersecting axis of different end surface shapes of the first end 102 or the second end 103 of the spoke main body 101, respectively, and the end of the "+"-shaped insert 70B facing the wedging direction is also of an increasingly thinned cutting edge structure, so that the insert is wedged into the notch 104.Similarly, the first end 102 and the second end 103 of the fiber spoke 10 each is provided with a section of notch 104 from the tail end to the middle in the axis direction. The notch 104 in the embodiment is the "+"-shaped notch 104B perpendicularly crossing at the center of the end surface of the cylinder of the first end 102 or the second end 103 of the fiber spoke 10, so that the tail end of the first end 102 or the second end 103 of the fiber spoke 10 is divided into four forking portions through the "+"-shaped notch 104B, and therefore, the "+"-shaped inserts 70B are wedged.

It is to be noted that in the embodiment, the "+"-shaped insert 70B and the "+"-shaped notch 104B are used, so that the first connecting piece and the second connecting piece in the embodiment are preferably in the hole wall shape where the section of the first section of the through hole of the connecting piece is a round hole, and the whole through hole can be such that the inner wall of the through hole of the first section and the inner wall of the through hole of the second section in the embodiment are in smooth cohesion transition and also can be such that a step structure is formed on the inner hole wall of the joint of the first section and the second section in the third embodiment.

According to the fiber spoke provided in the fourth embodiment, the first connecting piece 40, the second connecting piece 50 and the spoke main body 101 are tightly wedged and fixed by using the"+"-shaped insert 70B and the "+"-shaped notch 104B of different configurations. Compared with other embodiments, the fiber spoke provided in the fourth embodiment has advantages and disadvantages in manufacturing cost, structural performance and production operability, which will be comparatively described below and will not be described herein.

It is to be noted that different points listed in the embodiments are not enumerated one by one herein. For example, the inner wall of the through hole of the first section of the through hole of the connecting piece is in the shape of the cylindrical hole, the inner wall of the through hole of the first section of the through hole of the connecting piece is in the shape of the truncated cone shaped hole with slight taper, the inner wall of the through hole of the first section of the through hole of the connecting piece is in the shape of the substantially elliptically cylindrical hole, the inner wall of the through hole of the first section of the through hole of the connecting piece is in the shape of the substantially elliptically conical hole with slight taper, the inner wall of the through hole of the first section of the through hole of the connecting piece and the inner wall of the through hole of the second section are of the through hole of the connecting piece in smooth cohesion transition, a step structure is formed on the inner hole wall of the joint of the first section and the second section of the through hole of the connecting piece, the "-"-shaped notch is matched with the "-"-shaped insert on the end portion of the spoke main body, the "+"-shaped notch is matched with the "+"-shaped insert on the end portion of the spoke main body, the relatively long insert which exceeds the length of the first section of the through hole of the connecting piece and the insert equivalent to the first section of the through hole of the connecting piece in length can also be combined arbitrarily to form other embodiments.

In addition, in most cases, the inner wall of the through hole of the second section of the through hole of the connecting piece is in the shape of the cylindrical hole, so that it is conveniently adapted to the shape of the conventional cylindrical spoke main body 101 for facilitating the inserting operation. However, after the shapes of different spoke main bodies 101 are modified, the shape of the inner wall of the through hole of the second section of the through hole of the connecting piece can be also correspondingly adjusted to other hole patterns, for example hexagonal prism shape or elliptically cylindrical shape.

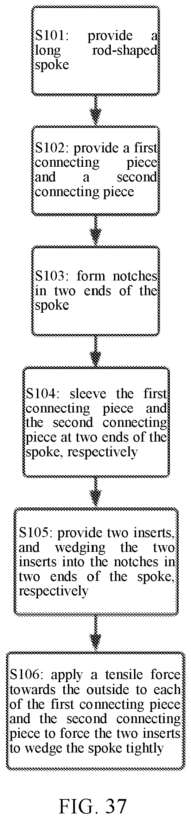

Based on the above embodiments, the present invention further provides a method for manufacturing a fiber spoke. As shown in FIG. 37, the method includes the following steps:
S101: a long rod-shaped spoke is provided, wherein the spoke is formed by bundling and curing and forming a plurality of fibers.
S102: a first connecting piece and a second connecting piece are provided, wherein the first connecting piece and the second connecting piece each includes a hollow columnar main body and a through hole passing through the main body in a central axis.

Specifically, the first connecting piece can be an enlarged head, and the second connecting piece can be an inner end portion, which are connected to a hub and a rim, respectively. More specifically, the first connecting piece and the second connecting piece can be of structures of the first connecting piece and the second connecting piece in the above embodiments.

S103: notches are formed in two ends of the spoke, wherein the notches can be formed by way of cutting, the configurations of the notches are adapted to the configurations of the inserts.

S104: the first connecting piece and the second connecting piece are sleeved at two ends of the spoke, respectively, wherein the first connecting piece and the second connecting piece are sleeved by the through hole, and the parts of the first connecting piece and the second connecting piece for installation outside are placed towards the outer end of the spoke.

S105: two inserts are provided, and the two inserts are wedged into the notches in two ends of the spoke, respectively, wherein the structures of the inserts can be structures of the inserts in the above embodiments.

S106: a tensile force towards the outside is applied to each of the first connecting piece and the second connecting piece to force the two inserts to wedge the spoke tightly.

It is to be noted that the above steps are not executed in a strict sequence but can be adjusted according to actual conditions. For example, the sequences of S103 and S104 can be exchanged.

Different performance of different embodiments of the present invention are exhibited and described below in combination with performance test conditions of several embodiments.

As shown in FIG. 22, in the test example I (implemented according to one structure of the embodiment I), the way of tightly wedging and fixing the first connecting piece 40A of the first configuration to the spoke main body 101 is adopted, i.e., the inner wall of the through hole of the first section of the through hole of the connecting piece and the inner wall of the through hole of the second section of the through hole of the connecting piece are of the structure of smooth cohesion transition ("a smooth hole wall solution" for short). As shown in FIG. 23, in the test example II (implemented according to one structure of the embodiment III), the way of tightly wedging and fixing the first connecting piece 40B of the second configuration to the spoke main body 101 is adopted, i.e., a step structure is formed on the inner hole wall of the joint of the first section and the second section of the through hole of the connecting piece ("a step hole wall solution" for short).Other parts of the two are consistent or similar. Specifically, the cross section of the inner wall of the through hole of the first section is round, the "-"-shaped notch is matched with the "-"-shaped insert on the end portion of the spoke main body, and the length of the insert is equivalent to that of the first section of the through hole of the connecting piece (the length of the insert is slightly smaller than that of the first section of the through hole of the connecting piece).

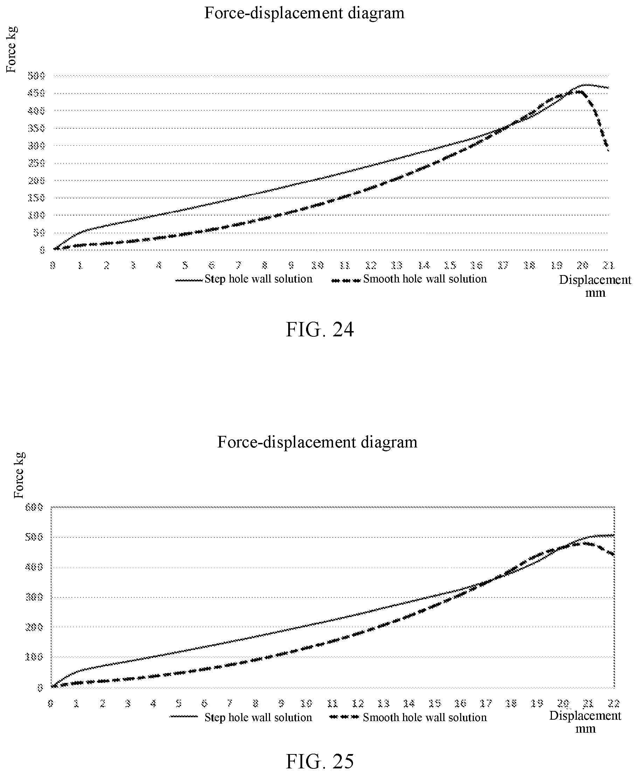

As shown in FIG. 24, after the two are connected and assembled, it can be seen from a detection result on the amplitude of the tensile force applied and the displacement of the connecting piece relative to the spoke main body that in the smooth hole wall solution is relatively moderate in the initial stage where the insert is held tightly, the ascending velocity of the force is relatively slow, and then with increase of stress of the smooth hole wall with slight taper, the curve of the force is progressively increased rapidly. The step hole wall solution is different: in the initial stage, owing to great magnitude of interference needed, the initial force is increased rapidly and then is linearly and progressively increased approximately. When the insert is embedded into the step of the step hole wall, the force starts to show a rapid climbing phenomenon at the time, i.e., the displacement is slowed down, so that the connecting piece is prevented from further sliding.

Thus it can be seen that the model adaptability of the through hole in the smooth hole wall solution is identical compared with that in the step hole wall solution in the initial stage where the through hole is adapted and fixedly connected to the insert, i.e., in the smooth hole wall solution, the insert is more easily held tightly in the initial tensioning stage, which is the advantage of the solution. However, in the later stage of tensioning, as the smooth hole wall has no enough steps (the second section and the first section are in smooth cohesion transition), when the tensile force is increased continuously, the smooth hole wall cannot resist the insert continuously to extrude the connecting piece inwards continuously, which may result a risk of deformation of the connecting piece.

Compared with the smooth hole wall solution, the step hole wall solution can better prevent the insert from sliding inwards continuously owing to its larger inner step. The model adaptability of the through hole in the step hole wall solution is not identical in the initial tensioning stage compared with the smooth hole wall solution.

To sum up, by comparing the smooth hole wall solution with the step hole wall solution, during conventional close-fitting fixed connection, the smooth hole wall solution is superior to the step hole wall solution. During extreme damage fixed connection, the step hole wall solution is superior to the smooth hole wall solution.

In the test examples III and IV, the length of the "-"-shaped insert wedged tightly by the "-"-shaped notch on the end portion of the spoke main body is increased based on the test examples I and II, so that the length of the insert is about 2 mm greater than the length of the first section of the through hole of the connecting piece, and then the test is performed.

As shown in FIG. 25, in the test examples III and IV, after the two are connected and assembled, it can be seen from a detection result on the amplitude of the tensile force applied and the displacement of the connecting piece relative to the spoke main body that by comparing FIG. 24 with FIG. 25, in the test examples III and IV, the stress distance of the first section (a clearance section) of the connecting piece can be increased by increasing the length of the insert, so that the strength of the tensile force of the spoke is improved, thereby effectively preventing a tensile force decreasing problem due to internal contraction of the insert in later use (the tail of the insert is completely sunken into the through hole of the connecting piece).

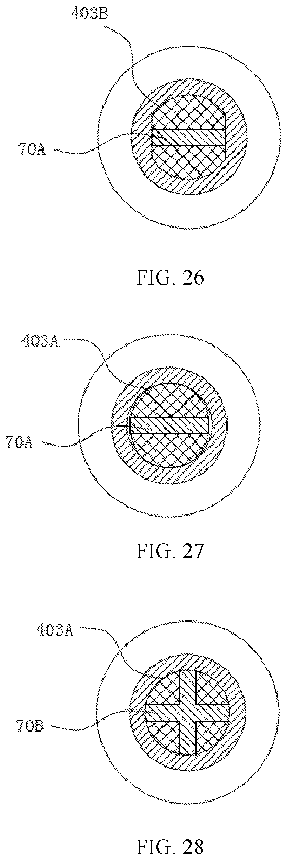

As shown in FIG. 26, in the test example V (implemented according to one structure in the embodiment II), the way (an "elliptical hole & "-"-shaped insert solution) of tightly wedging and fixing the first connecting piece of the through hole 403B of the second configuration and the spoke main body with the "-"-shaped insert 70A is adopted. As shown n FIG. 27, in the test example VI (implemented according to one structure in the embodiment I), the way ( a "round hole & "-"-shaped insert solution) of tightly wedging and fixing the first connecting piece of the through hole 403A of the first configuration and the spoke main body with the "-"-shaped insert 70A is adopted. As shown in FIG. 28, in the test example VII (implemented according to one structure in the embodiment IV), the way (a "round hole & "+"-shaped insert solution) of tightly wedging and fixing the first connecting piece of the through hole 403A of the first configuration and the spoke main body with the "+"-shaped insert 70B is adopted. Other parts of the three are consistent or similar. Specifically, the inner wall of the through hole of the first section of the through hole of the connecting piece and the inner wall of the through hole of the second section of the through hole of the connecting piece are in smooth cohesion transition, the length of the insert is equivalent to that of the first section of the through hole of the connecting piece, and the insert is made from stainless steel with relatively high yield strength.

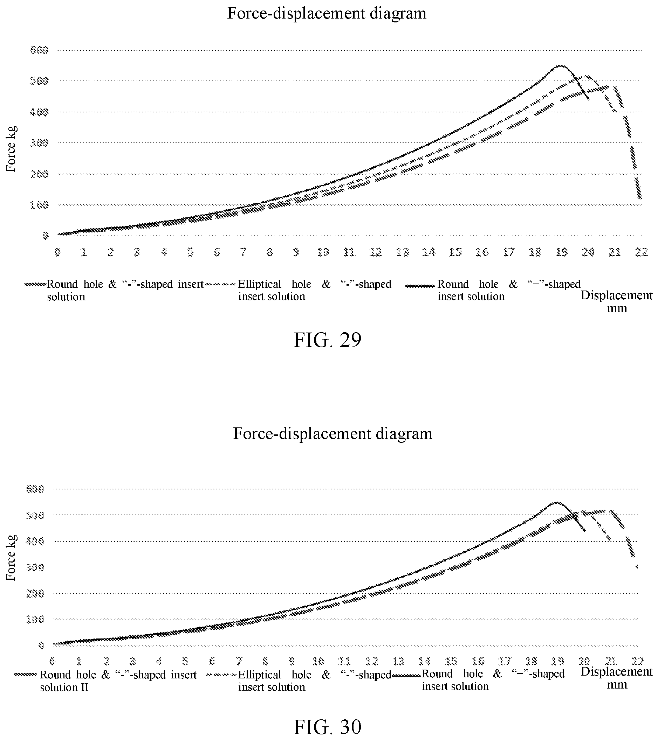

After the two are connected and assembled, a tensile force is applied by a tensile machine to test the connecting strength of the spoke, and the limit value and the test displacement are recorded, where the test velocity is 30 mm/min. According to the detection result on the amplitude of the tensile force applied and the displacement of the connecting piece relative to the spoke main body shown in FIG. 29, results are concluded in the following table:

| Solution | Limit value of tensile force | Displacement | Material of insert |
|---|---|---|---|
| Elliptical hole & "-"-shaped insert solution | 512kg | 19.7mm | Stainless steel |
| Round hole & "-"-shaped insert solution | 475kg | 20.8mm | Stainless steel |
| Round hole & "+"-shaped insert solution | 548kg | 18.8mm | Stainless steel |

It can be seen apparently that the round hole & "+"-shaped insert solution has the optimum structural performance with the lowest displacement, i.e., the climbing velocity of the force is the fastest, the elliptical hole & "-"-shaped insert solution takes the second place, and the performance of the round hole & "-"-shaped insert solution is the poorest.

By adopting the elliptical hole & "-"-shaped insert solution, the spoke body is stressed in the elliptical hole of the connecting piece on the upper and lower sides of the "-"-shaped insert. When the spoke main body is tensioned, the hole walls on two sides bear the compressing force, the left-right width of the hole wall is not smaller than the width of the insert and the spoke main body, and the up-down width of the hole wall is greater than the diameter of the spoke main body but is smaller than the size of the spoke main body after the insert is inserted. The solution has very good structural performance and is relatively easy to implement.

By adopting the round hole & "-"-shaped insert solution, the spoke body is also stressed in the round hole of the connecting piece on the upper and lower sides of the "-"-shaped insert, but there is fine clearance between the left and right sides. When the connecting piece is pulled to compress, the upper and lower surfaces bear large extrusion, which has certain impact on the product structure. However, the solution still has good structural performance, and the solution is the simplest one to implement with high production efficiency.

By adopting the round hole & "+"-shaped insert solution, the spoke main body is circumferentially stressed relative to the "+"-shaped insert in the round hole of the connecting piece. However, this solution has the defects of relatively complicated manufacturing and high cost of the "+"-shaped insert.

The above three test examples are concluded and compared in terms of processing cost, structural performance and production operability as follows:

| | Cost | Structural performance | Production operability |
|---|---|---|---|
| Elliptical hole & "-"-shaped insert solution | Lower | Better | Ordinary |
| Round hole & "-"-shaped insert solution | Lowest | Ordinary | Best |
| Round hole & "+"-shaped insert solution | Higher | Best | Better |

Through analysis and subsequent research trials on the round hole & "-"-shaped insert solution, the inventor finds that the main reason why the structural performance of the test example VI is slightly poorer than the structural performance of the other two test examples is that reduction of the "-"-shaped insert and the round hole of the connecting piece in assembling structural performance mainly results from gaps on two sides. Therefore, the inventor further provides a test example VIII. In the test example VIII, based on the test example VI, the stainless steel material with relatively high yield strength of the insert is replaced with the material with relatively low yield strength (a "round hole & "-"-shaped insert solution II" for short).By adopting an aluminum alloy insert, according to the characteristic that the aluminum alloy insert is soft, when the aluminum alloy insert is extruded, the gaps on two sides are filled to try to improve its performance.

As shown in FIG. 30, detection results on the amplitudes of the tensile forces applied in the test examples V, VII and VIII and the displacements of the connecting piece relative to the spoke main body are concluded in the following table:

| Solution | Limit value of tensile force | Displacement | Material of insert |
|---|---|---|---|
| Elliptical hole & "-"-shaped insert solution | 512kg | 19.7mm | Stainless steel |
| Round hole & "-"-shaped insert solution II | 515kg | 20.7mm | Aluminum alloy |
| Round hole & "+"-shaped insert solution | 548kg | 18.8mm | Stainless steel |

Thus it can be seen that the insert made from the material with relatively low yield strength is adopted for tightly wedging assembly, which can improve the connecting strength of the spoke main body and the connecting piece. The insert made from the material with relatively low yield strength can further be realized by the metal element aluminum, the tin alloy, the metal element tin, the lead alloy and even the softer metal element lead. The material with relatively low yield strength shall be the material with elasticity limit smaller than 10 kgf/mm².

The inventor further conducts tensile force standing comparison tests for the test examples V to VIII. Specifically, after the spoke main body and the connecting piece are connected and assembled, the tensile machine applies a 300 kg tensile force and then the spoke main body and the connecting piece are left still, and a tensile force attenuation trend is recorded, wherein the test velocity is 30 mm/min. The test results are shown in the following table:

| Solution | Initial tensile | 3 minutes | 10 minutes | 30 **minutes** | 2 hours later (kg) |
|---|---|---|---|---|---|
| | force (kg) | later (kg) | later (kg) | later (kg) | |
| Test example V: Elliptical hole & "-"-shaped insert solution | 301.8 | 298.5 | 297.8 | 297.5 | 297.4 |
| Test example VI: Round hole & "-"-shaped insert solution | 300.8 | 296.2 | 294.3 | 293.5 | 293.2 |
| Test example VIII: Round hole & "-"-shaped insert solution II | 301.1 | 297.6 | 296.7 | 296.4 | 296.4 |
| Test example VII: Round hole & "+"-insert solution | 301.5 | 299.2 | 298.8 | 298.7 | 298.7 |

Thus it can be seen that in the round hole & "+"-shaped insert solution of the test example VII, the tensile force attenuation amplitude is the smallest within the same time after standing, i.e., the amplitude of slip inside is the smallest, and the structure is the finnest. The elliptical hole & "-"-shaped insert solution in the test example V takes the second place. In the round hole & "-"-shaped insert solution of the test example VI, the attenuation is the fastest. After use of the round hole & "-"-shaped insert solution II of the test example VIII of the insert made from the aluminum alloy, the performance is enhanced relatively obviously.

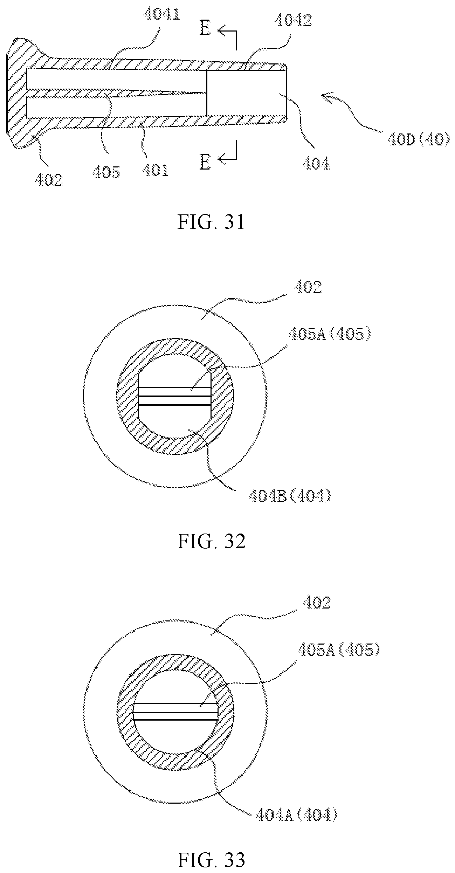

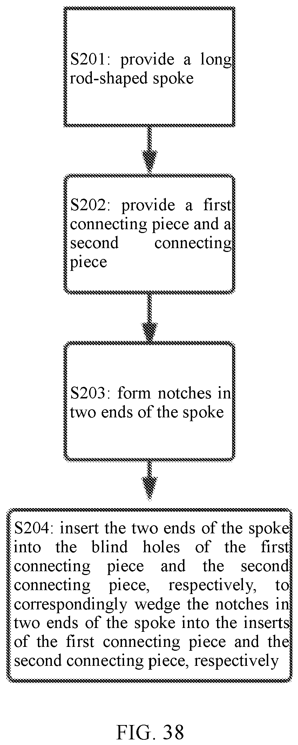

Referring to FIG. 31-39, another embodiment group of the present invention includes a plurality of specific embodiments. The embodiments in the embodiment group each provide a fiber spoke 10. The fiber spoke 10 also includes a long rod-shaped spoke main body 101 and a first connecting piece 40 and a second connecting piece 50 fixedly connected to two ends 102 and 103 of the spoke main body 101.Consistent with the above embodiments, the spoke main body 101 is formed by curing a plurality of bundled fibers made from a high-strength and high-modulus material by a strong resin. A middle section of the spoke main body 101 of the fiber spoke 10 in the embodiment is processed into a flat shaft shape in the forming and curing process, and the two ends 102 and 103 connected therewith are still cylinder axis-shaped, so that the flat shaft shape design of the middle section of the spoke main body 101 can be used for reducing wind resistance of the vehicle. The first connecting piece 40 and the second connecting piece 50 are manufactured from a hard metal, a ceramic or a hard engineering resin and the like. The first connecting piece 40 and the second connecting piece 50 have different structures of different abutted abutting objects. In the embodiment, the connecting piece 40 is an enlarged head, and the connecting piece 50 is an inner end portion, which are connected to a hub 30 and a rim 20, respectively. As shown in FIG. 1 and FIG. 2, the connecting piece 40 of the enlarged head of the first end 102 of each of the plurality of fiber spokes 10 can be clamped and hung into an assembly groove 301 of the hub 30, and the connecting piece 50 of the inner end portion of the second end 103 can be fixed in an inner groove 201 of the rim 20 through a spoke nipple 60, thereby forming an integral vehicle wheel.

As shown in FIG. 31, the first connecting piece 40 in the embodiment group serves as the enlarged head connected to the hub 30. The specific structure of the first connecting piece includes a cylindrical main body 401, a protrusion 402 formed at one end of the main body 401 with a larger outer diameter and a blind hole 404 extending from the other end to the end of the protrusion 402 in the central axis and stretching into the main body 401.The blind hole 404 can be substantially divided into two sections: a first section 4041 closer to the protrusion 402 and a second section 4042 farther away from the protrusion 402, respectively. An erectly arranged insert 405 is fixedly connected to the inner bottom wall of the blind hole 404, and the length of the insert 405 is preferably not smaller than that of the first section 4041.The first connecting piece 40 in the embodiment group is the first connecting piece 40D of the fourth configuration. As the insert 405 is fixedly connected to the inner bottom wall of the blind hole 404, it only needs to insert one end of the fiber spoke 10 provided with the section of notch 104 into the blind hole 404 to complete assembly and connection rapidly. Although the firmness is not as good as that in the above embodiments, the embodiment group is more convenient in production and operation.

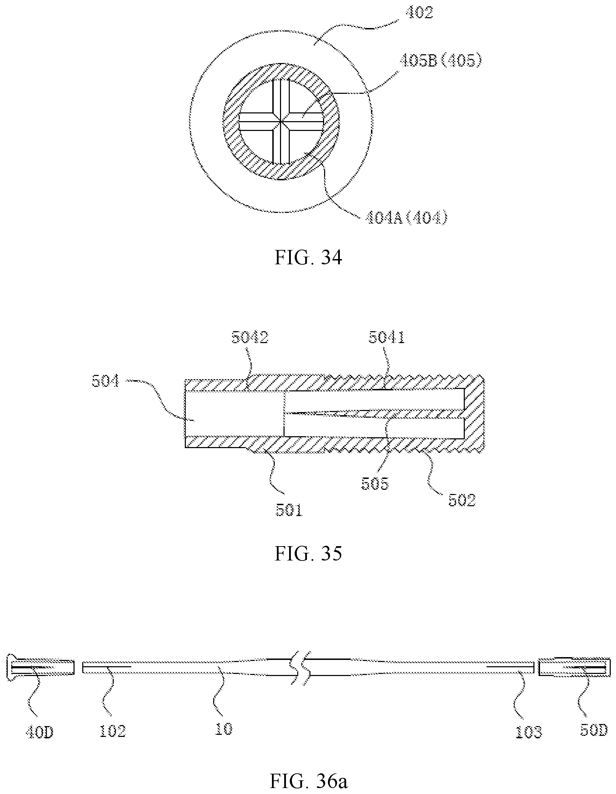

Configurations of the blind hole 404 of the first connecting piece 40 and the insert 405 in each embodiment in the embodiment group can be diversified. For example, in an embodiment shown in FIG. 32, the blind hole 404 is the blind hole 404B of the second configuration, wherein the inner wall of the blind hole is the substantially elliptically conical hole with slight taper, and the insert 405 is the "-"-shaped insert 405A.In another embodiment shown in FIG. 33, the blind hole 404 is the blind hole 404A of the first configuration, wherein the inner wall of the blind hole is the truncated cone shaped conical hole with slight taper, and the insert 405 is the "-"-shaped insert 405A.In yet another embodiment shown in FIG. 34, the blind hole 404 is the blind hole 404A of the second configuration, wherein the inner wall of the blind hole is the truncated cone shaped conical hole with slight taper, and the insert 405 is the "+"-shaped insert 405B.

In addition, in the embodiment group, as shown in FIG. 30, the inner wall of the blind hole of the first section of the blind hole of the first connecting piece and the inner wall of the blind hole of the second section of the blind hole of the first connecting piece can be in smooth cohesion transition, and a step structure can be formed on the inner hole wall of the joint of the first section and the second section of the blind hole of the first connecting piece.

As shown in FIG. 35, the second connecting piece 50 in the embodiment group serves as the inner end portion abutted with the spoke nipple 60. The specific structure of the second connecting piece includes a cylindrical main body 501, an external thread 502 formed at one end of the main body 501 for threaded connection and assembly with an internal thread of the spoke nipple 60 and a blind hole 504 extending from the other end to the end of the external thread 502 in the central axis and stretching into the main body 501.The blind hole 504 can be substantially divided into two sections in the axis direction: a first section 5041 closer to the external thread 502 and a second section 5042 farther away from the external thread 502, respectively. An insert 505 is fixedly connected to the inner bottom wall of the blind hole 504, and the length of the insert 505 is preferably not smaller than that of the first section 5041.The second connecting piece 50 in the embodiment group is the second connecting piece 50D of the fourth configuration. As the insert 505 is fixedly connected to the inner bottom wall of the blind hole 504, it only needs to insert one end of the fiber spoke 10 provided with the section of notch 104 into the blind hole 504 to complete assembly and connection rapidly. Although the firmness is not as good as that in the above embodiments, the embodiment group is more convenient in production and operation.

In addition, in the embodiment group, as shown in FIG. 35, the inner wall of the blind hole of the first section of the blind hole of the second connecting piece and the inner wall of the blind hole of the second section of the blind hole of the second connecting piece can be in smooth cohesion transition, and a step structure can be formed on the inner hole wall of the joint of the first section and the second section of the blind hole of the second connecting piece.

Configurations of the blind hole 504 of the second connecting piece 50 and the insert 505 in the embodiment group can be in various forms of the first connecting piece 40, which is not repeatedly described herein.

Beside the above structures, the implementation structures of the first connecting piece 40 and the second connecting piece 50 in the embodiment group can be any combination of different points listed in the embodiments I to IV. Specifically speaking, the inner wall of the blind hole of the first section of the blind hole of the connecting piece is in the shape of the cylindrical hole, the inner wall of the blind hole of the first section of the blind hole of the connecting piece is in the shape of the truncated cone shaped hole with slight taper, the inner wall of the blind hole of the first section of the blind hole of the connecting piece is in the shape of the substantially elliptically cylindrical hole, the inner wall of the blind hole of the first section of the blind hole of the connecting piece is in the shape of the substantially elliptically conical hole with slight taper, the inner wall of the blind hole of the first section of the blind hole of the connecting piece and the inner wall of the blind hole of the second section are of the blind hole of the connecting piece in smooth cohesion transition, a stepped structure is formed on the inner hole wall of the joint of the first section and the second section of the blind hole of the connecting piece, the "-"-shaped notch is matched with the "-"-shaped insert in the blind hole on the end portion of the spoke main body, the "+"-shaped notch is matched with the "+"-shaped insert in the blind hole on the end portion of the spoke main body, the length of the insert in the blind hole of the connecting piece exceeds the length of the first section of the blind hole of the connecting hole, and the length of the insert in the blind hole of the connecting piece is substantially equivalent to that of the first section of the blind hole of the connecting piece. These different points can be combined in use so as to form other embodiments in the embodiment group.

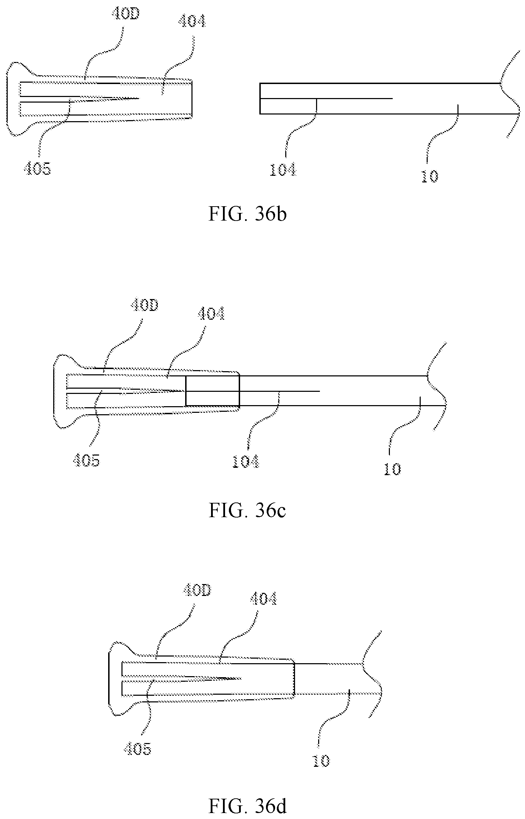

Referring to FIG. 36a to FIG. 36d, during assembly, the first end 102 and the second end 103 of the fiber spoke 10 with the notch 104, corresponding to the shape of the insert, cut in advance are inserted into the first connecting piece 40D of the fourth configuration and the second connecting piece 50D of the fourth configuration, respectively. The first connecting piece 40D of the fourth configuration and the second connecting piece 50D of the fourth configuration both are inserted from open ends of the blind hole 404 and the blind hole 504.After the first end 102 and the second end 103 of the fiber spoke 10 are inserted into the bottom, the insert 405 of the blind hole 404 and the insert 505 of the blind hole 504 are wedged into the notches 104 in the first end 102 and the second end 103 of the fiber spoke 10, respectively. The protrusion 402 of the first connecting piece 40D of the fourth configuration and the external thread 502 of the second connecting piece 50D of the fourth configuration face the outer end to complete installation and connection.

It can be seen from the above description that the first connecting piece 40D of the fourth configuration and the second connecting piece 50D of the fourth configuration are simpler and more convenient to install and connect as the inserts 405 and 505 are arranged in the blind holes. As the insert in the blind hole of the connecting piece in the embodiment fastens the spoke main body by means of the principle of the mortise and tenon joint structure, when the fiber spoke 10 is inserted into the bottom to be tightly wedged by the inserts 405 and 505, it can generate a compressing force with extremely strength with the connecting piece. During subsequent use, it is difficult to release in case of tensile force.

The present invention further provides a vehicle wheel. As shown in FIG. 1, the vehicle wheel includes the fiber spoke 10 in the embodiments and further includes a rim 20 and a hub 30 connected by the spoke fiber 10.

In an embodiment, the vehicle wheel is a bicycle wheel.

The present invention further provides a vehicle, including the vehicle wheel and further including a frame for installing the vehicle wheel.

In an embodiment, the vehicle is a bicycle.

## Claims

1. A fiber spoke system, comprising a fiber spoke (10) with a long rod-shaped spoke main body (101) and connecting pieces (40, 40A, 40B, 40C, 40D; 50, 50A, 50B, 50C, 50D) fixedly connected to an outer end (102; 103) of the spoke main body (101), wherein each of the connecting pieces (40, 40A, 40B, 40C, 40D; 50, 50A, 50B, 50C, 50D) comprises a columnar main body (401; 501) and a hole extending in a direction of a central axis of the main body (401; 501), the outer end (102; 103) of the spoke main body (101) provided with a section of notch (104) extending from a tail end to the middle in the axis direction, and the outer end (102; 103) of the spoke main body (101) divided into at least two forking portions through the notch (104); the fiber spoke (10) further comprises an insert (70) capable of being matched with the notch (104), the outer end (102; 103) of the spoke main body (101) is arranged in the hole, and in the hole, the insert (70) is wedged into the notch (104), so that the spoke main body (101) and the connecting piece (40, 40A, 40B, 40C, 40D; 50, 50A, 50B, 50C, 50D) can be tightly wedged in the hole by virtue of acting forces between the insert (70) and the forking portions at the outer end (102; 103) of the spoke main body (101),
**characterized in that** the insert (70) is a "+"-shaped insert (70B), and the notch (104) is a "+"-shaped notch (104B), with the "+"-shaped insert (70B) formed by perpendicularly crossing two "-"-shaped inserts (70A), with the length thereof corresponding to the depth of the notch (104) and the transverse width and the longitudinal width of the two crossed sheet bodies thereof corresponding to the outer diameter of the corresponding intersecting axis of the outer end surface of the spoke main body (101), respectively, and the end of the "+"-shaped insert (70B) facing the wedging direction is of an increasingly thinned cutting edge structure.

2. The fiber spoke system according to claim 1, **characterized in that** the hole is a through hole (403, 403A, 403B, 403C; 503, 503A, 503B, 503C) extending and penetrating along the central axis direction of the main body (401; 501), the insert (70) is an independent part, and the insert (70) is wedged into the notch (104) from an outward end of the through hole (403, 403A, 403B, 403C; 503, 503A, 503B, 503C) after the spoke main body (101) is sleeved in the through hole (403, 403A, 403B, 403C; 503, 503A, 503B, 503C).

3. The fiber spoke system according to claim 1, **characterized in that** the hole is a blind hole (404, 404A, 404B; 504) extending from one end to the other end in the central axis direction of the main body (401; 501) and stretching into the main body (401; 501), the insert (405, 405A, 405B; 505) is erectly and fixedly connected to a bottom wall of the blind hole (404, 404A, 404B; 504), and the insert (405, 405A, 405B; 505) is wedged into the notch (104) in the blind hole (404, 404A, 404B; 504) after the tail end of the spoke main body (101) is inserted into the blind hole (404, 404A, 404B; 504).

4. The fiber spoke system according to claim 1, **characterized in that** two ends of the main body (401; 501) are defined as a first end and a second end about the axis extension direction of the main body (401; 501) of the connecting piece (40, 40A, 40B, 40C, 40D; 50, 50A, 50B, 50C, 50D), and the hole (403, 403A, 403B, 403C; 503, 503A, 503B, 503C) is divided into two sections (4031, 4032; 5031, 5032) in the axis direction, namely, a first section (4031; 5031) closer to the first end and a second section (4032; 5032) closer to the second end, wherein
- a hole inwall of the first section (4031; 5031) and a hole inwall of the second section (4032; 5032) are in smooth cohesion transition; or
- a step structure (4033; 5033) is formed on a hole wall of a joint of the first section (4031; 5031) and the second section (4032; 5032), in particular with the step structure (4033; 5033) being further provided with a chamfer angle.

5. The fiber spoke system according to claim 4, **characterized in that** the first end
- of the connecting piece (40, 40A, 40B, 40C, 40D) is provided with a protrusion (402) with a larger outer diameter, so that the connecting piece (40, 40A, 40B, 40C, 40D) serves as an enlarged head; or
- of the connecting piece (50, 50A, 50B, 50C, 50D) is provided with an external thread (502), so that the connecting piece (50, 50A, 50B, 50C, 50D) serves as an inner end portion.

6. The fiber spoke system according to claim 4, **characterized in that** the hole inwall
- of the first section (4031; 5031) of the hole is in a shape of a cylindrical hole or a truncated cone shaped hole with slight taper or a substantially elliptically cylindrical hole or a substantially elliptically conical hole with slight taper; or
- of the second section (4032; 5032) of the hole is in a shape of a cylindrical hole.

7. The fiber spoke system according to claim 4, **characterized in that** a ratio of the length of the first section (4031; 5031) to that of the second section (4032; 5032) is 2:1.

8. The fiber spoke system according to claim 1, **characterized in that** the insert (70) is a "-"-shaped insert (70A), and the notch (104) is a "-"-shaped notch (104A), in particular with a contour of the "-"-shaped insert (70A) in a front view being rectangular, with the length thereof corresponding to the depth of the notch (104A) and the width thereof corresponding to a diameter of an outer end surface of the spoke main body (101), and a contour of the "-"-shaped insert (70A) in a side view being substantially "-"-shaped, but the end facing the wedging direction being of an increasingly thinned cutting edge structure.

9. The fiber spoke system according to claim 4, **characterized in that** the length of the insert (70) and the depth of the notch (104) are not smaller than the length of the first section (4031; 5031), in particular with the length of the insert (70) and the depth of the notch (104) being greater than the length of the first section (4031; 5031).

10. The fiber spoke system according to claim 1, **characterized in that** the insert (70) is made from a material with a yield strength, in particular with the insert (70) being made from a material with a relatively low yield strength, an elasticity limit of the material being smaller than 10 kgf/mm², in particular with the insert (70) being made from a metal element aluminum, a tin alloy, a metal element tin, a lead alloy or a metal element lead.

11. The fiber spoke system according to claim 1, **characterized in that** the spoke main body (101) is a long rod formed by curing a plurality of bundled fibers made from a high-strength and high-modulus material.

12. The fiber spoke system according to claim 1, **characterized in that** the cross-section of the hole inwall of the hole is
- elliptical or quasi-elliptical, the insert (70; 405) is the "-"-shaped insert (70A; 405A), and the notch (104) is the "-"-shaped notch (104A); or
- round, the insert (70; 405) being the "+"-shaped insert (70B; 405B), and the notch (104) being the "+"-shaped notch (104B), or being the "-"-shaped insert (70A; 405A), and the notch (104) being the "-"-shaped notch (104A), in particular with the "-"-shaped insert (70A; 405A) being made from a material with the relatively low yield strength, the elasticity limit of the material being smaller than 10 kgf/mm².

13. A vehicle wheel, in particular a bicycle wheel, **characterized by** comprising the fiber spoke system according to any one of claims 1 to 12 and further comprising a rim (20) and a hub (30) connected by the spoke fiber.

14. A vehicle, in particular a bicycle, **characterized by** comprising the vehicle wheel according to claim 13 and further comprising a frame for installing the vehicle wheel.

## Patentansprüche

1. Faserspeichensystem, aufweisend eine Faserspeiche (10) mit einem langen, stabförmigen Speichenhauptkörper (101) und Verbindungsstücken (40, 40A, 40B, 40C, 40D; 50, 50A, 50B, 50C, 50D), die fest mit einem äußeren Ende (102; 103) des Speichenhauptkörpers (101) verbunden sind, wobei jedes der Verbindungsstücke (40, 40A, 40B, 40C, 40D; 50, 50A, 50B, 50C, 50D) einen säulenförmigen Hauptkörper (401; 501) und eine Bohrung aufweist, die sich in Richtung einer Zentralachse des Hauptkörpers (401; 501) erstreckt, wobei das äußere Ende (102; 103) des Speichenhauptkörpers (101) mit einem Abschnitt einer Aussparung (104) versehen ist, der sich von einem hinteren Ende bis zur Mitte in Achsenrichtung erstreckt, und das äußere Ende (102; 103) des Speichenhauptkörpers (101) durch die Aussparung (104) in mindestens zwei sich verzweigende Abschnitte unterteilt ist; die Faserspeiche (10) des Weiteren einen Einsatz (70) aufweist, der in die Aussparung (104) eingepasst werden kann, wobei das äußere Ende (102; 103) des Speichenhauptkörpers (101) in der Bohrung angeordnet ist und der Einsatz (70) in der Bohrung in die Aussparung (104) eingeklemmt ist, so dass der Speichenhauptkörper (101) und das Verbindungsstück (40, 40A, 40B, 40C, 40D; 50, 50A, 50B, 50C, 50D) durch die zwischen dem Einsatz (70) und den sich verzweigenden Abschnitte am äußeren Ende (102; 103) des Speichenhauptkörpers (101) wirkenden Kräfte fest in der Bohrung verkeilt werden können, **dadurch gekennzeichnet, dass** der Einsatz (70) ein "+"-förmiger Einsatz (70B) ist und die Aussparung (104) eine "+"-förmige Aussparung (104B) ist, wobei der "+"-förmige Einsatz (70B) durch zwei sich senkrecht kreuzende "-"-förmige Einsätze (70A) gebildet ist, wobei deren Länge der Tiefe der Aussparung (104) entspricht und die Querbreite sowie die Längsbreite der zwei gekreuzten Blechkörper hiervon jeweils dem Außendurchmesser der entsprechenden Schnittachse der äußeren Endfläche des Speichenhauptkörpers (101) entspricht und das der Keilrichtung zugewandte Ende des "+"-förmigen Einsatzes (70B) von sich zunehmend verjüngender Schneidkantenstruktur ist.

2. Faserspeichensystem gemäß Anspruch 1, **dadurch gekennzeichnet, dass** die Bohrung ein Durchgangsloch (403, 403A, 403B, 403C; 503, 503A, 503B, 503C) ist, das sich entlang der Richtung der Zentralachse des Hauptkörpers (401; 501) erstreckt sowie durchdringt, der Einsatz (70) ein unabhängiges Teil ist und der Einsatz (70) von einem äußeren Ende des Durchgangslochs (403, 403A, 403B, 403C; 503, 503A, 503B, 503C) in die Aussparung (104) eingeklemmt ist, nachdem der Speichenhauptkörper (101) in das Durchgangsloch (403, 403A, 403B, 403C; 503, 503A, 503B, 503C) eingeschoben ist.

3. Faserspeichensystem gemäß Anspruch 1, **dadurch gekennzeichnet, dass** die Bohrung ein Sackloch (404, 404A, 404B; 504) ist, das sich von einem Ende zum anderen Ende in Richtung der Zentralachse des Hauptkörpers (401; 501) erstreckt und in den Hauptkörper (401; 501) hineinragt, wobei der Einsatz (405, 405A, 405B; 505) aufrecht und fest mit einer Bodenwand des Sacklochs (404, 404A, 404B; 504) verbunden ist und der Einsatz (405, 405A, 405B; 505) in die Aussparung (104) im Sackloch (404, 404A, 404B; 504) eingeklemmt ist, nachdem das hintere Ende des Speichenhauptkörpers (101) in das Sackloch (404, 404A, 404B; 504) eingeführt ist.

4. Faserspeichensystem gemäß Anspruch 1, **dadurch gekennzeichnet, dass** zwei Enden des Hauptkörpers (401; 501) als ein erstes Ende und ein zweites Ende in Bezug auf die Richtung der Achserstreckung des Hauptkörpers (401; 501) des Verbindungsstücks (40, 40A, 40B, 40C, 40D; 50, 50A, 50B, 50C, 50D) definiert sind und die Bohrung (403, 403A, 403B, 403C; 503, 503A, 503B, 503C) in zwei Abschnitte (4031, 4032; 5031, 5032) in Achsrichtung unterteilt ist, nämlich einen dem ersten Ende näheren ersten Abschnitt (4031; 5031) und einen dem zweiten Ende näheren zweiten Abschnitt (4032; 5032), wobei
- eine Wanddurchgangsbohrung des ersten Abschnitts (4031; 5031) und eine Wanddurchgangsbohrung des zweiten Abschnitts (4032; 5032) fließend ineinander übergehen; oder
- eine Stufenstruktur (4033; 5033) an einer Lochwand einer Verbindung des ersten Abschnitts (4031; 5031) und des zweiten Abschnitts (4032; 5032) ausgebildet ist, insbesondere wobei die Stufenstruktur (4033; 5033) des Weiteren mit einem Fasenwinkel versehen ist.

5. Faserspeichensystem gemäß Anspruch 4, **dadurch gekennzeichnet, dass** das erste Ende
- des Verbindungsstücks (40, 40A, 40B, 40C, 40D) mit einem Vorsprung (402) mit größerem Außendurchmesser versehen ist, so dass das Verbindungsstück (40, 40A, 40B, 40C, 40D) als ein vergrößerter Kopf dient; oder
- des Verbindungsstücks (50, 50A, 50B, 50C, 50D) mit einem Außengewinde (502) versehen ist, so dass das Verbindungsstück (50, 50A, 50B, 50C, 50D) als ein innerer Endabschnitt dient.

6. Faserspeichensystem gemäß Anspruch 4, **dadurch gekennzeichnet, dass** die Wanddurchgangsbohrung
- des ersten Abschnitts (4031; 5031) der Bohrung in Form einer zylindrischen Bohrung oder einer kegelstumpfförmigen Bohrung mit leichter Verjüngung oder einer im Wesentlichen elliptisch-zylindrischen Bohrung oder einer im Wesentlichen elliptisch-konischen Bohrung mit leichter Verjüngung ist; oder
- des zweiten Abschnitts (4032; 5032) der Bohrung in Form einer zylindrischen Bohrung ist.

7. Faserspeichensystem gemäß Anspruch 4, **dadurch gekennzeichnet, dass** ein Verhältnis der Länge des ersten Abschnitts (4031; 5031) zur Länge des zweiten Abschnitts (4032; 5032) 2:1 ist.

8. Faserspeichensystem gemäß Anspruch 1, **dadurch gekennzeichnet, dass** der Einsatz (70) ein "-"-förmiger Einsatz (70A) ist und die Aussparung (104) eine "-"-förmige Aussparung (104A) ist, insbesondere wobei eine Kontur des "-"-förmigen Einsatzes (70A) in einer Vorderansicht rechteckig ist, wobei dessen Länge der Tiefe der Aussparung (104A) entspricht und dessen Breite einem Durchmesser einer äußeren Endfläche des Speichenhauptkörpers (101) entspricht und eine Kontur des "-"-förmigen Einsatzes (70A) in einer Seitenansicht im Wesentlichen "-"-förmig ist, wobei jedoch das der Keilrichtung zugewandte Ende von sich zunehmend verjüngender Schneidkantenstruktur ist.

9. Faserspeichensystem gemäß Anspruch 4, **dadurch gekennzeichnet, dass** die Länge des Einsatzes (70) und die Tiefe der Aussparung (104) nicht kleiner als die Länge des ersten Abschnitts (4031; 5031) sind, insbesondere wobei die Länge des Einsatzes (70) und die Tiefe der Aussparung (104) größer als die Länge des ersten Abschnitts (4031; 5031) sind.

10. Faserspeichensystem gemäß Anspruch 1, **dadurch gekennzeichnet, dass** der Einsatz (70) aus einem Material mit einer Streckgrenze hergestellt ist, insbesondere wobei der Einsatz (70) aus einem Material mit einer relativ niedrigen Streckgrenze hergestellt ist, wobei eine Elastizitätsgrenze des Materials kleiner als 10 kgf/mm² ist, insbesondere wobei der Einsatz (70) aus einem Metallelement Aluminium, einer Zinnlegierung, einem Metallelement Zinn, einer Bleilegierung oder einem Metallelement Blei hergestellt ist.

11. Faserspeichensystem gemäß Anspruch 1, **dadurch gekennzeichnet, dass** der Speichenhauptkörper (101) ein langer Stab ist, der durch Aushärten einer Vielzahl gebündelter Fasern aus einem Material mit hoher Festigkeit und hohem Elastizitätsmodul gebildet ist.

12. Faserspeichensystem gemäß Anspruch 1, **dadurch gekennzeichnet, dass** der Querschnitt der Wanddurchgangsbohrung der Bohrung
- elliptisch oder quasi-elliptisch ist, der Einsatz (70; 405) der "-"förmige Einsatz (70A; 405A) ist und die Aussparung (104) die "-"förmige Aussparung (104A) ist; oder
- rund ist, wobei der Einsatz (70; 405) der "+"-förmige Einsatz (70B; 405B) ist und die Aussparung (104) die "+"-förmige Aussparung (104B) ist oder der "-"-förmige Einsatz (70A; 405A) ist und die Aussparung (104) die "-"-förmige Aussparung (104A) ist, insbesondere wobei der "-"-förmige Einsatz (70A; 405A) aus einem Material mit einer relativ niedrigen Streckgrenze hergestellt ist, wobei die Elastizitätsgrenze des Materials kleiner als 10 kgf/mm² ist.

13. Fahrzeugrad, insbesondere Fahrradrad, **dadurch gekennzeichnet, dass** es das Faserspeichensystem gemäß einem der Ansprüche 1 bis 12 aufweist und des Weiteren eine Felge (20) und eine Nabe (30) aufweist, die durch die Faserspeiche verbunden sind.

14. Fahrzeug, insbesondere Fahrrad, **dadurch gekennzeichnet, dass** es das Fahrzeugrad gemäß Anspruch 13 aufweist und des Weiteren einen Rahmen zum Installieren des Fahrzeugrads aufweist.

## Revendications

1. Système de rayons en fibre, comprenant un rayon en fibre (10) comportant un corps principal de rayon (101) allongé en forme de tige et des pièces de raccordement (40, 40A, 40B, 40C, 40D ; 50, 50A, 50B, 50C, 50D) reliées de manière fixe à une extrémité extérieure (102 ; 103) du corps principal de rayon (101), dans lequel chacune des pièces de raccordement (40, 40A, 40B, 40C, 40D ; 50, 50A, 50B, 50C, 50D) comprend un corps principal colonnaire (401 ; 501) et un trou s'étendant dans la direction de l'axe central du corps principal (401 ; 501), l'extrémité extérieure (102 ; 103) du corps principal de rayon (101) étant pourvue d'une section en encoche (104) s'étendant depuis une extrémité arrière jusqu'au milieu dans la direction de l'axe, et l'extrémité extérieure (102 ; 103) du corps principal de rayon (101) étant divisée en au moins deux parties fourchues par l'encoche (104) ; le rayon en fibre (10) comprend en outre un insert (70) pouvant s'emboîter dans l'encoche (104), l'extrémité extérieure (102 ; 103) du corps principal de rayon (101) étant disposée dans le trou, et, dans le trou, l'insert (70) étant calé dans l'encoche (104), de sorte que le corps principal de rayon (101) et la pièce de raccordement (40, 40A, 40B, 40C, 40D ; 50, 50A, 50B, 50C, 50D) puissent être solidement calés dans le trou grâce aux forces agissant entre l'insert (70) et les parties en fourche situées à l'extrémité extérieure (102 ; 103) du corps principal de rayon (101),
**caractérisé en ce que** l'insert (70) est un insert en forme de « + » (70B), et l'encoche (104) est une encoche en forme de « + » (104B), l'insert en forme de « + » (70B) étant formé par le croisement perpendiculaire de deux inserts en forme de « - » (70A), dont la longueur correspond à la profondeur de l'encoche (104) et dont la largeur transversale et la largeur longitudinale des deux corps de tôle croisés correspondent respectivement au diamètre extérieur de l'axe d'intersection correspondant de la surface d'extrémité extérieure du corps principal de rayon (101), respectivement, et l'extrémité de l'insert en forme de « + » (70B) tournée vers la direction de calage présente une structure de tranchant progressivement amincie.

2. Système de rayons en fibre selon la revendication 1, **caractérisé en ce que** le trou est un trou traversant (403, 403A, 403B, 403C ; 503, 503A, 503B, 503C) s'étendant et traversant le corps principal (401 ; 501) dans la direction de son axe central, l'insert (70) est une pièce indépendante, et l'insert (70) est calé dans l'encoche (104) à partir d'une extrémité extérieure du trou traversant (403, 403A, 403B, 403C ; 503, 503A, 503B, 503C) après que le corps principal de rayon (101) a été emboîté dans le trou traversant (403, 403A, 403B, 403C ; 503, 503A, 503B, 503C).

3. Système de rayons en fibre selon la revendication 1, **caractérisé en ce que** le trou est un trou borgne (404, 404A, 404B ; 504) s'étendant d'une extrémité à l'autre dans la direction de l'axe central du corps principal (401 ; 501) et s'enfonçant dans le corps principal (401 ; 501), l'insert (405, 405A, 405B ; 505) est relié de manière verticale et fixe à une paroi inférieure du trou borgne (404, 404A, 404B ; 504), et l'insert (405, 405A, 405B ; 505) est calé dans l'encoche (104) du trou borgne (404, 404A, 404B ; 504) une fois que l'extrémité arrière du corps principal de rayon (101) a été insérée dans le trou borgne (404, 404A, 404B ; 504).

4. Système de rayons en fibre selon la revendication 1, **caractérisé en ce que** les deux extrémités du corps principal (401 ; 501) sont définies comme une première extrémité et une seconde extrémité par rapport à la direction d'extension de l'axe du corps principal (401 ; 501) de la pièce de raccordement (40, 40A, 40B, 40C, 40D ; 50, 50A, 50B, 50C, 50D), et le trou (403, 403A, 403B, 403C ; 503, 503A, 503B, 503C) est divisé en deux sections (4031, 4032 ; 5031, 5032) dans la direction de l'axe, à savoir une première section (4031 ; 5031) plus proche de la première extrémité et une deuxième section (4032 ; 5032) plus proche de la deuxième extrémité, dans lequel
- un trou dans la paroi de la première section (4031 ; 5031) et un trou dans la paroi de la deuxième section (4032 ; 5032) présentent une transition lisse et continue ; ou
- une structure en gradin (4033 ; 5033) est formée sur la paroi d'un alésage au niveau d'un raccord entre la première section (4031 ; 5031) et la deuxième section (4032 ; 5032), en particulier la structure en gradin (4033 ; 5033) étant pourvue d'un angle de chanfrein.

5. Système de rayons en fibre selon la revendication 4, **caractérisé en ce que** la première extrémité
- de la pièce de raccordement (40, 40A, 40B, 40C, 40D) est pourvue d'une saillie (402) présentant un diamètre extérieur plus grand, de sorte que la pièce de raccordement (40, 40A, 40B, 40C, 40D) fait office de tête élargie ; ou
- de la pièce de raccordement (50, 50A, 50B, 50C, 50D) est pourvue d'un filetage extérieur (502), de sorte que la pièce de raccordement (50, 50A, 50B, 50C, 50D) fait office de partie d'extrémité intérieure.

6. Système de rayons en fibre selon la revendication 4, **caractérisé en ce que** la paroi interne du trou
- de la première section (4031 ; 5031) du trou présente la forme d'un trou cylindrique ou d'un trou en forme de cône tronqué présentant un léger rétrécissement, ou d'un trou sensiblement ellipsoïdal-cylindrique ou d'un trou sensiblement ellipsoïdal-conique présentant un léger rétrécissement ; ou
- de la deuxième section (4032 ; 5032) présente la forme d'un trou cylindrique.

7. Système de rayons en fibre selon la revendication 4, **caractérisé en ce que** le rapport entre la longueur de la première section (4031 ; 5031) et celle de la deuxième section (4032 ; 5032) est de 2:1.

8. Système de rayons en fibre selon la revendication 1, **caractérisé en ce que** l'insert (70) est un insert en forme de « - » (70A), et l'encoche (104) est une encoche en forme de « - » (104A), en particulier le contour de l'insert en forme de « - » (70A), vu de face, étant rectangulaire, sa longueur correspondant à la profondeur de l'encoche (104A) et sa largeur correspondant au diamètre d'une surface d'extrémité extérieure du corps principal de rayon (101), et le contour de l'insert en forme de « - » (70A), vu de profil, étant sensiblement en forme de « - », mais l'extrémité tournée vers la direction de calage présentant une structure de tranchant de plus en plus amincie.

9. Système de rayons en fibre selon la revendication 4, **caractérisé en ce que** la longueur de l'insert (70) et la profondeur de l'encoche (104) ne sont pas inférieures à la longueur de la première section (4031 ; 5031), en particulier la longueur de l'insert (70) et la profondeur de l'encoche (104) étant supérieures à la longueur de la première section (4031 ; 5031).

10. Système de rayons en fibre selon la revendication 1, **caractérisé en ce que** l'insert (70) est réalisé dans un matériau présentant une limite d'élasticité, en particulier **en ce que** l'insert (70) est réalisé dans un matériau présentant une limite d'élasticité relativement faible, la limite d'élasticité du matériau étant inférieure à 10 kgf/mm², en particulier l'insert (70) étant constitué d'un élément métallique tel que l'aluminium, d'un alliage d'étain, d'un élément métallique tel que l'étain, d'un alliage de plomb ou d'un élément métallique tel que le plomb.

11. Système de rayons en fibre selon la revendication 1, **caractérisé en ce que** le corps principal de rayon (101) est une longue tige formée par le durcissement d'une pluralité de faisceaux de fibres constitués d'un matériau à haute résistance et à module élevé.

12. Système de rayons en fibre selon la revendication 1, **caractérisé en ce que** la section transversale de la paroi interne du trou est
- elliptique ou quasi-elliptique, l'insert (70 ; 405) est l'insert en forme de « - » (70A ; 405A), et l'encoche (104) est l'encoche en forme de « - » (104A) ; ou
- circulaire, l'insert (70 ; 405) étant l'insert en forme de « + » (70B ; 405B), et l'encoche (104) étant l'encoche en forme de « + » (104B), ou l'insert étant en forme de « - » (70A ; 405A), et l'encoche (104) étant l'encoche en forme de « - » (104A), en particulier l'insert en forme de « - » (70A ; 405A) étant réalisé dans un matériau présentant une limite d'élasticité relativement faible, la limite d'élasticité du matériau étant inférieure à 10 kgf/mm².

13. Roue de véhicule, en particulier roue de vélo, **caractérisée en ce qu'**elle comprend le système de rayons en fibre selon l'une quelconque des revendications 1 à 12 et comprend en outre une jante (20) et un moyeu (30) reliés par les rayons en fibres.

14. Véhicule, en particulier bicyclette, **caractérisée en ce qu'**il comprend la roue de véhicule selon la revendication 13 et comprend en outre un cadre destiné à recevoir ladite roue de véhicule.
